# EUROPÄISCHE PATENTANMELDUNG

(11) **EP 3 015 085 A1**
(43) Veröffentlichungstag der Anmeldung: **04.05.2016**
(21) Anmeldenummer: 15191400.9
(22) Anmeldetag: 26.10.2015
(51) Int. Cl.: A61C 3/025, B24C 9/00

(54) **STRAHLGERÄT**

(30) Priorität: 28.10.2014 DE 102014115675
(71) Anmelder: Renfert GmbH, 78247 Hilzingen (DE)
(72) Erfinder: GOLDHAGEN, Sven, 78315 Radolfzell (DE)
(74) Vertreter: Daub, Thomas

(57) **Zusammenfassung**

Die Erfindung geht aus von einem Strahlgerät, insbesondere von einem Dentalstrahlgerät, mit zumindest einer Strahlkammer (12) und mit zumindest einem Gehäuse (14), welches zumindest teilweise aus Kunststoff besteht und zumindest einen Grundkörper (16) aufweist, der die Strahlkammer (12) zumindest teilweise umgibt.

Es wird vorgeschlagen, dass das Gehäuse (14) zumindest teilweise in einem Spritzgussverfahren hergestellt ist.

## Beschreibung

### Stand der Technik

Die Erfindung betrifft ein Strahlgerät, insbesondere ein Dentalstrahlgerät, mit zumindest einer Strahlkammer und mit zumindest einem Gehäuse, welches zumindest einen Grundkörper aufweist, der die Strahlkammer zumindest teilweise umgibt.

Die Aufgabe der Erfindung besteht insbesondere darin, eine gattungsgemäße Vorrichtung mit verbesserten Eigenschaften hinsichtlich eines Gewichts, hinsichtlich einer Variabilität sowie hinsichtlich eines Herstellungs- und Montageaufwands bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Strahlgerät, insbesondere von einem Dentalstrahlgerät, mit zumindest einer Strahlkammer und mit zumindest einem Gehäuse, welches zumindest teilweise aus Kunststoff besteht und zumindest einen Grundkörper aufweist, der die Strahlkammer zumindest teilweise umgibt.

Es wird vorgeschlagen, dass das Gehäuse zumindest teilweise in einem Spritzgussverfahren hergestellt ist. Es sind verschiedene, einem Fachmann als sinnvoll erscheinende Kunststoffe denkbar. Vorzugsweise besteht das Gehäuse zumindest teilweise aus einem amorphen Kunststoff. Bevorzugt besteht das Gehäuse zumindest teilweise aus einem ABS-Kunststoff, d.h. aus Acrylnitril-Butadien-Styrol. Besonders bevorzugt besteht insbesondere der Grundkörper vollständig aus Kunststoff. Bevorzugt besteht das Gehäuse zumindest annähernd vollständig aus Kunststoff. Vorzugsweise ist das Gehäuse vollständig in einem Spritzgussverfahren hergestellt. Bevorzugt ist das Gehäuse in einem Thermoplast-Spritzgussverfahren hergestellt. Besonders bevorzugt ist das Gehäuse in einem Kompaktspritzgussverfahren hergestellt. Unter einem "Strahlgerät" soll in diesem Zusammenhang insbesondere ein Gerät verstanden werden, das zu einem Ausstrahlen von Strahlgut in eine Strahlkammer vorgesehen ist. Vorzugsweise wird das Strahlgut über ein Handstück ausgestrahlt. Besonders bevorzugt soll darunter insbesondere ein Gerät verstanden werden, das zu einer Oberflächenbearbeitung von Produkten, insbesondere Dentalprodukten, mittels eines Luft-Strahlgut-Gemischs vorgesehen ist. Dabei soll unter einem "Strahlgut" insbesondere ein Material verstanden werden, das pulverförmig und/oder feinkörnig ist und das dazu vorgesehen ist, eine Oberfläche eines Produkts, insbesondere eines Dentalprodukts, beim Auftreffen abzutragen und/oder zu verdichten. Ferner soll dabei unter einem "Handstück" insbesondere eine von einem Bediener zumindest teilweise während eines Betriebs gehaltene Einheit verstanden werden. Vorzugsweise soll darunter insbesondere eine Einheit verstanden werden, welche zumindest eine Düse aufweist, über welche zumindest teilweise während eines Betriebs Strahlgut, insbesondere ein Luft-Strahlgut-Gemisch, ausgestrahlt wird. Ferner soll in diesem Zusammenhang unter einer "Strahlkammer" insbesondere eine Kammer verstanden werden, in welcher das Strahlgut in zumindest einem Betriebszustand austritt. Vorzugsweise soll darunter insbesondere eine Kammer verstanden, welche in zumindest einem Zustand zumindest im Wesentlichen abgeschlossen ist. Besonders bevorzugt soll darunter insbesondere eine Betriebskammer verstanden werden, welche einen Arbeitsbereich eines Bedieners definiert und dazu vorgesehen ist, ein unkontrolliertes Umherfliegen von Strahlgut zu verhindern. Des Weiteren soll in diesem Zusammenhang unter einem "Gehäuse" insbesondere ein Bauteil des Strahlgeräts verstanden werden, welches die Strahlkammer zumindest teilweise umgreift und/oder begrenzt. Vorzugsweise soll darunter insbesondere ein Bauteil verstanden werden, welches zumindest teilweise eine Außenkontur des Strahlgeräts definiert. Bevorzugt soll darunter insbesondere ein Bauteil verstanden, welches zumindest teilweise eine Grundstruktur des Strahlgeräts bildet. Besonders bevorzugt soll darunter insbesondere ein Bauteil verstanden werden, welches zumindest einen Teil von Bauteilen des Strahlgeräts, die von dem Gehäuse differieren, miteinander verbindet. Unter einem "Grundkörper" des Gehäuses soll in diesem Zusammenhang insbesondere ein Teil des Gehäuses verstanden werden, welcher insbesondere einen zumindest wesentlichen Teil, also insbesondere zumindest 20%, vorzugsweise zumindest 30% und besonders bevorzugt zumindest 50% eines Volumens des Gehäuses bildet. Vorzugsweise soll darunter insbesondere ein Teil des Gehäuses verstanden werden, welcher die Strahlkammer zumindest teilweise umgreift und/oder begrenzt. Besonders bevorzugt soll darunter insbesondere ein Teil des Gehäuses verstanden werden, welches zumindest teilweise Teilbereiche des Gehäuses, welche von dem Grundkörper differieren, miteinander verbindet. Darunter, dass "das Gehäuse zumindest teilweise aus Kunststoff besteht" soll in diesem Zusammenhang insbesondere verstanden werden, dass zumindest 40%, vorzugsweise zumindest 60% und besonders bevorzugt zumindest 80% eines Materialvolumens aus einem Kunststoff besteht. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch eine erfindungsgemäße Ausgestaltung des Strahlgeräts kann insbesondere ein vorteilhaft leichtes und trotz allem robustes Strahlgerät bereitgestellt werden. Vorzugsweise kann dadurch das Gehäuse vorteilhaft kostengünstig ausgeführt werden. Ferner kann ein Herstellaufwand sowie ein Montageaufwand des Strahlgeräts gering gehalten werden. Des Weiteren kann dadurch vorteilhaft eine hohe Variabilität des Strahlgeräts, insbesondere des Gehäuses, erreicht werden. Es kann ferner eine vorteilhaft hohe Funktionsdichte des Strahlgeräts, insbesondere des Gehäuses, erreicht werden. Insbesondere können bei einem Spritzgussverfahren vorteilhaft direkt Bauteile an das Gehäuse angespritzt werden. Hierdurch kann ein vorteilhaft geringer Montageaufwand erreicht werden.

Ferner wird vorgeschlagen, dass das Strahlgerät zumindest eine Frontschürze aufweist, welche fest mit dem Gehäuse verbunden ist und dazu vorgesehen ist, zumindest einen Teilbereich des Gehäuses abzudecken. Vorzugsweise ist die Frontschürze dazu vorgesehen, zumindest einen Teilbereich des Grundkörpers von außen abzudecken. Bevorzugt besteht die Frontschürze zumindest teilweise aus Kunststoff. Bevorzugt besteht die Frontschürze zumindest teilweise aus einem amorphen Kunststoff. Besonders bevorzugt besteht die Frontschürze zumindest teilweise aus ABS-Kunststoff. Unter einer "Frontschürze" soll in diesem Zusammenhang insbesondere eine vorne angeordnete, insbesondere einem Bediener zugewandte Blende verstanden werden. Vorzugsweise soll darunter insbesondere eine Blende verstanden werden, welche in einem montierten Zustand zumindest einen vorderen, insbesondere einem Bediener zugewandten Teilbereich des Gehäuses abdeckt. Bevorzugt soll darunter insbesondere eine Blende verstanden werden, welche zumindest teilweise getrennt von dem Gehäuse ausgebildet ist. Besonders bevorzugt soll darunter insbesondere eine Blende verstanden werden, welche zumindest teilweise von dem Gehäuse beabstandet ausgebildet ist. Dadurch kann insbesondere in einem, einem Bediener zugewandten Teilbereich des Strahlgeräts eine Zweiwandigkeit erreicht werden. Dadurch kann vorteilhaft ein Bediener zusätzlich geschützt werden. Ferner kann dadurch vorteilhaft ein Schallschutz erreicht werden. Vorzugsweise kann eine hohe Stabilität des Gehäuses erreicht werden.

Des Weiteren wird vorgeschlagen, dass die zumindest eine Frontschürze zumindest ein Rastelement aufweist, welches mit zumindest einem korrespondierenden Rastelement des Gehäuses verrastet. Vorzugsweise ist die Frontschürze rastend mit dem Gehäuse verbunden. Unter einem "Rastelement" soll in diesem Zusammenhang insbesondere ein federelastisches Element zur Herstellung einer Rastverbindung verstanden werden, das dazu vorgesehen ist, bei einer Montage elastisch ausgelenkt zu werden. Vorzugsweise soll darunter insbesondere ein Element verstanden werden, das bei einem Befestigungsvorgang elastisch ausgelenkt wird, um anschließend durch eine innere Spannkraft hinter einem korrespondierenden Rastelement einzurasten. Dadurch kann insbesondere eine vorteilhaft einfach herzustellende und zu lösende Verbindung zwischen der Frontschürze und dem Gehäuse bereitgestellt werden. Ferner kann insbesondere eine vorteilhaft zuverlässige Verbindung zwischen der Frontschürze und dem Gehäuse bereitgestellt werden.

Es wird ferner vorgeschlagen, dass das zumindest eine Gehäuse zumindest eine von einer Handöffnung differierende Lüftungsöffnung aufweist, die in einem montierten Zustand der Frontschürze zumindest im Wesentlichen von der Frontschürze verdeckt wird. Unter einer "Handöffnung" soll in diesem Zusammenhang insbesondere eine Öffnung in dem Gehäuse verstanden werden, durch welche während eines regulären Betriebs eine Hand eines Bedieners in die Strahlkammer geführt ist. Vorzugsweise weist das Gehäuse zwei Handöffnungen auf, durch welche jeweils eine Hand des Bedieners geführt werden kann. Ferner soll in diesem Zusammenhang unter einer "Lüftungsöffnung" insbesondere eine Öffnung verstanden werden, welche von einer Handöffnung differiert und zu der Strahlkammer hin in das Gehäuse eingebracht ist. Vorzugsweise soll darunter insbesondere eine Öffnung verstanden werden, über welche kontrolliert Luft in die Strahlkammer einströmen kann. Besonders bevorzugt kann über die Lüftungsöffnung Luft in die Strahlkammer gelangen, um trotz einer Absaugung in der Strahlkammer einen Unterdruck zu vermeiden. Ferner kann so verhindert werden, dass Luft über die Handöffnungen angesaugt wird. Darunter, dass "die Lüftungsöffnung zumindest im Wesentlichen von der Frontschürze verdeckt wird" soll in diesem Zusammenhang insbesondere verstanden werden, dass in einer Frontalansicht des Strahlgeräts, in einer gedachten Bildebene, zumindest 50%, vorzugsweise zumindest 70% und besonders bevorzugt zumindest 90% einer Fläche der Lüftungsöffnung von der Frontschürze verdeckt ist. Des Weiteren soll in diesem Zusammenhang unter "verdeckt" insbesondere verstanden werden, dass sich zwischen der Lüftungsöffnung und einem Bediener in einer Arbeitsposition die Frontschürze befindet. Vorzugsweise soll darunter insbesondere verstanden werden, dass von außen eine Sicht auf die Lüftungsöffnung durch die Frontschürze verhindert ist. Dadurch kann vorteilhaft ein Schall einer über die Lüftungsöffnung angesaugten Luft für einen Bediener durch die Frontschürze gedämpft werden. Zudem kann auch ein durch die Lüftungsöffnung austretender Schall aus der Strahlkammer für einen Bediener durch die Frontschürze gedämpft werden. Ferner kann ein Schutz eines Bedieners vor aus der Lüftungsöffnung geschleuderten Teilen erreicht werden.

Zudem wäre denkbar, dass die Lüftungsöffnung eine variabele Öffnungsgröße aufweist. Vorzugsweise wäre dabei denkbar, dass die Lüftungsöffnung drosselbar ist. Eine Drosselbarkeit der Lüftungsöffnung könnte beispielsweise durch eine verschiebbare Blende und/oder Maske erreicht werden.

Es wird weiter vorgeschlagen, dass das zumindest eine Gehäuse zumindest eine mit dem Grundkörper des Gehäuses einstückig ausgebildete Auslegereinheit aufweist, welche zu einer unteren Aufnahme zumindest einer Strahlguttankeinheit vorgesehen ist. Vorzugsweise dient die Auslegereinheit zusätzlich als Kippschutz. Besonders bevorzugt ist die Auslegereinheit an den Grundkörper des Gehäuses angespritzt. Unter einer "Auslegereinheit" soll in diesem Zusammenhang insbesondere ein Teil des Gehäuses verstanden werden, der, insbesondere stegförmig, aus dem Grundkörper des Gehäuses auskragt. Bevorzugt ist die Auslegereinheit dazu vorgesehen, zumindest teilweise eine Auflagefläche für die Strahlguttankeinheit zu bilden. Des Weiteren soll unter "einstückig" insbesondere zumindest stoffschlüssig verbunden verstanden werden, beispielsweise durch einen Schweißprozess, einen Klebeprozess, einen Anspritzprozess und/oder einen anderen, einem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Ferner soll in diesem Zusammenhang unter einer "Strahlguttankeinheit" insbesondere eine Einheit mit zumindest einem Tankbehälter zur Aufnahme eines Strahlguts verstanden werden. Vorzugsweise soll darunter insbesondere eine Einheit mit zumindest einem Tankbehälter und mit zumindest einer mit dem Tankbehälter verbundenen Mischeinheit verstanden werden. Dabei soll unter einer "Mischeinheit" insbesondere eine Einheit verstanden werden, die in zumindest einem Betriebszustand dazu vorgesehen ist, Druckluft mit dem Strahlgut zu vermischen, um ein Luft-Strahlgut-Gemisch bereitzustellen, das für eine Bearbeitung von Produkten, insbesondere Dentalprodukten, vorgesehen ist. Darunter, dass "die Auslegereinheit an den Grundkörper angespritzt ist" soll in diesem Zusammenhang insbesondere verstanden werden, dass die Auslegereinheit in einem Spritzverfahren an den Grundkörper angeformt oder in einem Spritzgussverfahren mit dem Grundkörper geformt ist. Die Auslegereinheit kann sowohl in einem separaten Arbeitsschritt an den Grundkörper angespritzt werden, als auch in einem Spitzgussverfahren mit dem Grundkörper gemeinsam geformt werden. Dadurch kann insbesondere eine Anzahl von Bauteilen des Strahlgeräts gering gehalten werden. Ferner kann insbesondere eine zuverlässige Befestigung einer Strahlguttankeinheit ermöglicht werden. Besonders bevorzugt kann dadurch insbesondere ein Montageaufwand des Strahlgeräts gering gehalten werden. Insbesondere kann eine hohe Funktionsdichte des Gehäuses erreicht werden.

Ferner weist die zumindest eine Auslegereinheit des Gehäuses zumindest eine Ausnehmung auf, die zu einer lateralen Sicherung der zumindest einen Strahlguttankeinheit vorgesehen ist. Vorzugsweise ist die zumindest eine Ausnehmung dazu vorgesehen, zumindest einen Fortsatz der zumindest einen Strahlguttankeinheit aufzunehmen und lateral zu sichern. Besonders bevorzugt ist die Ausnehmung dazu vorgesehen, die zumindest eine Strahlguttankeinheit in einer Ebene, insbesondere in einer horizontalen Ebene, zu sichern. Dadurch kann eine zuverlässige Sicherung der zumindest einen Strahlguttankeinheit erreicht werden.

Des Weiteren wird vorgeschlagen, dass das zumindest eine Gehäuse zumindest eine mit dem Grundkörper des Gehäuses einstückig ausgebildete, weitere Auslegereinheit aufweist, welche zu einer Aufnahme zumindest einer Einstelleinheit zu einer Einstellung eines Drucks der zumindest einen Strahlguttankeinheit vorgesehen ist. Vorzugsweise kann über die Einstelleinheit ein Druck in der zumindest einen Strahlguttankeinheit eingestellt werden. Bevorzugt ist die Einstelleinheit als Druckminderer ausgebildet. Besonders bevorzugt ist die weitere Auslegereinheit an den Grundkörper des Gehäuses angespritzt. Dadurch kann insbesondere eine Anzahl von Bauteilen des Strahlgeräts gering gehalten werden. Ferner kann insbesondere eine zuverlässige Befestigung einer Einstelleinheit ermöglicht werden. Besonders bevorzugt kann dadurch insbesondere ein Montageaufwand des Strahlgeräts gering gehalten werden. Insbesondere kann eine hohe Funktionsdichte des Gehäuses erreicht werden.

Es wird ferner vorgeschlagen, dass das zumindest eine Gehäuse zumindest eine mit dem Grundkörper des Gehäuses zumindest teilweise einstückig ausgebildete Absaugöffnung aufweist. Besonders bevorzugt weist die Absaugöffnung zumindest ein Führungsrohr auf, welches an den Grundkörper des Gehäuses angespritzt ist. Unter einer "Absaugöffnung" soll in diesem Zusammenhang eine Öffnung verstanden werden, über welche Luft und/oder Strahlgut aus der Strahlkammer angesaugt werden kann. Vorzugsweise soll darunter insbesondere eine Öffnung verstanden werden, über welche überschüssiges bzw. bereits verwendetes Strahlgut aus der Strahlkammer angesaugt werden kann. Bevorzugt soll darunter insbesondere eine Öffnung verstanden, welche in die Strahlkammer ragt und in einem Betrieb vorzugsweise an eine Absaugung angeschlossen ist. Dadurch kann vorteilhaft ein Umherfliegen von Strahlgut in der Strahlkammer zumindest reduziert werden. Ferner kann eine hohe Funktionsdichte des Gehäuses erreicht werden.

Zudem wird vorgeschlagen, dass das zumindest eine Gehäuse zumindest eine mit dem Grundkörper des Gehäuses einstückig ausgebildete Schlauchhalterung aufweist, die dazu vorgesehen ist, einen Schlauch eines Handstücks an einer Unterseite des Gehäuses zu führen. Vorzugsweise ist die Schlauchhalterung dazu vorgesehen, einen Schlauch, der sich zwischen einer Strahlguttankeinheit und dem Handstück erstreckt, an einer Unterseite des Gehäuses zu führen. Bevorzugt ist die Schlauchhalterung dazu vorgesehen, einen Schlauch lösbar einzuklemmen. Besonders bevorzugt ist die Schlauchhalterung an den Grundkörper des Gehäuses angespritzt. Unter einer "Schlauchhalterung" soll in diesem Zusammenhang insbesondere ein Element verstanden werden, welches dazu vorgesehen ist, einen Schlauch in einem Teilabschnitt entlang der Haupterstreckung des Schlauches zu positionieren. Vorzugsweise soll darunter insbesondere ein Element verstanden werden, welches dazu vorgesehen ist, einen Schlauch in einem Teilabschnitt entlang der Haupterstreckung des Schlauchs zu halten. Besonders bevorzugt umgreift die Schlauchhalterung den Schlauch dazu zumindest teilweise. Dadurch kann insbesondere eine Anzahl von Bauteilen des Strahlgeräts gering gehalten werden. Ferner kann insbesondere eine zuverlässige Führung des Schlauchs an dem Gehäuse ermöglicht werden. Vorzugsweise kann dadurch insbesondere ein Montageaufwand des Strahlgeräts gering gehalten werden.

Ferner wird vorgeschlagen, dass das Strahlgerät zumindest eine Handstulpeneinheit aufweist, mit zumindest einer Stulpe und mit zumindest einem Befestigungsring, über welchen die Handstulpeneinheit bajonettverschlussartig mit dem zumindest einen Gehäuse lösbar verbunden ist. Unter einer "Handstulpeneinheit" soll in diesem Zusammenhang insbesondere eine Einheit verstanden werden, welche vorzugsweise in einer Handöffnung des Gehäuses angeordnet ist und während eines Betriebs dazu vorgesehen ist, ein Austreten von Strahlgut aus der Strahlkammer über die Handöffnung zu verhindern. Vorzugsweise soll darunter insbesondere eine Einheit verstanden werden, die während eines Betriebs dazu vorgesehen ist, eine Lücke zwischen dem Gehäuse und einer Hand bzw. einem Arm des Bedieners variabel zumindest teilweise zu schließen. Ferner soll in diesem Zusammenhang unter einer "Stulpe" insbesondere ein bewegliches, röhrenförmiges Element verstanden werden, welches mit einem Ende dazu vorgesehen ist, eine Hand bzw. einen Arm des Bedieners zu umschließen und mit einem anderen Ende dazu vorgesehen ist, rundum an einer Handöffnung des Gehäuses anzuliegen. Vorzugsweise soll darunter insbesondere ein Element verstanden werden, welches mit einem Ende dazu vorgesehen ist, eine Hand bzw. einen Arm des Bedieners ärmelartig zu umschließen, und welches sich zu einem anderen Ende hin trichterförmig erweitert, um an einer Handöffnung des Gehäuses anzuliegen. Vorzugsweise besteht die Stulpe aus einem beweglichen, elastischen Material, wie beispielsweise einem textilen Material. Darunter, dass "die Handstulpeneinheit über den zumindest einen Befestigungsring bajonettverschlussartig mit dem zumindest einen Gehäuse lösbar verbunden ist" soll in diesem Zusammenhang insbesondere verstanden werden, dass der Befestigungsring form- und/oder kraftschlüssig, lösbar mit dem Gehäuse verbunden ist und gleichzeitig den Stulpen an dem Gehäuse fixiert. Die Verbindung ist dabei vorzugsweise zumindest teilweise mittels einer kombinierten Bewegung aus einer Steckbewegung und einer Drehbewegung verbindbar und/oder lösbar. Dadurch kann insbesondere eine einfache Montage der zumindest einen Handstulpeneinheit erreicht werden. Ferner kann insbesondere auch ein schneller Wechsel der zumindest einen Handstulpeneinheit ermöglicht werden.

Grundsätzlich wäre jedoch auch denkbar, dass die Handstulpeneinheit mittels einer alternativen, einem Fachmann als sinnvoll erscheinenden Verbindung mit dem Gehäuse verbunden ist. Dabei wäre beispielsweise denkbar, dass die Handstulpeneinheit über den zumindest einen Befestigungsring magnetisch mit dem zumindest einen Gehäuse lösbar verbunden ist. Hierdurch könnte ebenfalls eine einfache Montage sowie ein schneller Wechsel der zumindest einen Handstulpeneinheit ermöglicht werden. Insbesondere könnte so zuverlässig schnell auch ein benutzerspezifischer Wechsel der Handstulpeneinheit ermöglicht werden. Die Handstulpeneinheit könnte dabei bereits an einem Ärmel eines Bedieners befestigt sein.

Des Weiteren wird vorgeschlagen, dass das zumindest eine Gehäuse an einem Öffnungsbereich der zumindest einen Strahlkammer an einer Oberkante des Grundkörpers einen Versteifungskragen aufweist, in welche eine Aufnahmenut zur Aufnahme einer Dichtung integriert ist. Vorzugsweise ist die Aufnahmenut zu einer formschlüssigen Aufnahme einer Dichtung vorgesehen. Bevorzugt ist die Dichtung in die Aufnahmenut eingesteckt. Dadurch könnte insbesondere ein einfacher Wechsel der Dichtung ermöglicht werden. Besonders bevorzugt ist die Dichtung zu einer Anlage an einer Schutzklappe vorgesehen, welche in zumindest einem Zustand dazu vorgesehen ist, den Öffnungsbereich zumindest teilweise abzudecken. Unter einem "Öffnungsbereich" der Strahlkammer soll in diesem Zusammenhang insbesondere ein Bereich einer größten Öffnung der Strahlkammer und/oder des Gehäuses verstanden werden. Vorzugsweise soll darunter insbesondere ein Bereich einer Zuführ- und Entnahmeöffnung der Strahlkammer und/oder des Gehäuses verstanden werden. Dabei soll unter einer "Zuführ- und Entnahmeöffnung" insbesondere eine Öffnung verstanden werden, über welche zu bearbeitende Produkte, insbesondere Dentalprodukte, vorzugsweise vor und/oder nach einem Betrieb, der Strahlkammer zugeführt werden können und/oder aus der Strahlkammer entnommen werden können. Ferner soll in diesem Zusammenhang unter einer "Oberkante" insbesondere eine Kante verstanden werden, mit welcher der Grundkörper zu dem Öffnungsbereich hin ausläuft und/oder an den Öffnungsbereich angrenzt. Vorzugsweise soll darunter insbesondere eine Kante verstanden werden, welche auf einer einem Untergrund abgewandten Seite des Grundkörpers angeordnet ist. Des Weiteren soll unter einem "Versteifungskragen" in diesem Zusammenhang insbesondere ein Kragen verstanden werden, der zu einer Versteifung und Stabilisierung des Grundkörpers dient. Vorzugsweise soll darunter insbesondere ein zumindest teilweise umlaufender falzartiger Kragen verstanden werden. Besonders bevorzugt soll darunter insbesondere ein Kragen verstanden werden, der einen zumindest annähernd U-förmigen Querschnitt aufweist. Unter einer "Dichtung" soll in diesem Zusammenhang insbesondere ein Element verstanden werden, das in zumindest einem Betriebszustand dazu vorgesehen ist, ungewollte Stoffübergänge von einem Raum in einen anderen zumindest zu begrenzen. Vorzugsweise ist die Dichtung zumindest in einem geschlossen Zustand der Schutzklappe dazu vorgesehen, ungewollte Stoffübergänge in einem Spalt zwischen dem Grundkörper und der Schutzklappe von der Strahlkammer in eine Umgebung zumindest zu begrenzen. Es sind verschiedene, einem Fachmann als sinnvoll erscheinende Dichtungen denkbar, wie beispielsweise eine Profildichtung.

Durch eine entsprechende Ausgestaltung des Strahlgeräts kann zuverlässig eine hohe Stabilität sowie eine hohe Steifigkeit des Gehäuses erreicht werden. Insbesondere könnte so eine Wandstärke des Gehäuses vorteilhaft gering gehalten werden. Ferner kann dadurch vorteilhaft einfach eine Befestigung der Dichtung ermöglicht werden. Vorzugsweise kann so ein Montageaufwand vorteilhaft gering gehalten werden. Zudem kann auch ein leichter Wechsel der Dichtung ermöglicht werden.

Es wird ferner vorgeschlagen, dass das Strahlgerät ein Funktionsprofil aufweist, welches zu einer Stabilisierung des Gehäuses fest mit dem zumindest einen Gehäuse verbunden ist. Vorzugsweise dient das Funktionsprofil zudem zu einer sicheren Befestigung von Bauteilen an dem Strahlgerät. Unter einem "Funktionsprofil" soll in diesem Zusammenhang insbesondere ein Konstruktionsprofil verstanden werden. Vorzugsweise soll darunter insbesondere ein Konstruktionsprofil verstanden werden, das zu einer Realisierung unterschiedlicher Funktionen vorgesehen ist. Besonders bevorzugt soll darunter insbesondere ein Konstruktionsprofil verstanden werden, an welchem zumindest mehrere Bauteile befestigt sind. Dadurch kann insbesondere eine vorteilhaft hohe Stabilität des Strahlgeräts erreicht werden. Ferner kann zumindest ein Teil von Funktionen und Befestigungen von dem Gehäuse auf das Funktionsprofil ausgelagert werden. Dadurch kann wiederum eine hohe Belastung des Gehäuses vermieden werden.

Es wird weiter vorgeschlagen, dass das Funktionsprofil zumindest eine Befestigungsnut zu einer Befestigung zumindest einer Strahlguttankeinheit aufweist. Vorzugsweise ist die Befestigungsnut von einer T-Nut gebildet. Grundsätzlich wären jedoch auch andere, einem Fachmann als sinnvoll erscheinende Befestigungsnuten denkbar. Durch die Befestigungsnut kann insbesondere zuverlässig eine Strahlguttankeinheit befestigt werden. Insbesondere wäre auch denkbar, dass über die Befestigungsnut verschiedene Größen von Strahlguttankeinheiten befestigt werden könnten.

Zudem wird vorgeschlagen, dass das Funktionsprofil als Strangpressprofil ausgebildet ist. Vorzugsweise ist das Funktionsprofil als Aluminium-Strangpressprofil ausgebildet. Grundsätzlich wäre jedoch auch denkbar, dass das Funktionsprofil als Kunststoff-Strangpressprofil ausgebildet ist. Dadurch kann insbesondere eine hohe Stabilität des Funktionsprofils erreicht werden. Ferner kann dadurch eine hohe Funktionalität des Funktionsprofils erreicht werden. Zudem kann ein Funktionsprofil vorteilhaft kostengünstig hergestellt werden. Des Weiteren wird vorgeschlagen, dass das Funktionsprofil zumindest teilweise aus einem elektrisch leitfähigen Material besteht. Vorzugsweise besteht das Funktionsprofil vollständig aus einem elektrisch leitfähigen Material. Besonders bevorzugt weist das Funktionsprofil zumindest eine Fläche auf, welche direkt an die Strahlkammer angrenzt. Unter einem "elektrisch leitfähigen Material" soll in diesem Zusammenhang insbesondere ein Material oder ein Materialverbund verstanden werden, das/der bei einer Temperatur von 25 °C eine elektrische Leitfähigkeit von zumindest 10⁻⁸ S/m, vorzugsweise von zumindest 1 S/m und besonders bevorzugt von zumindest 10⁵ S/m aufweist. Dadurch kann vorteilhaft eine Entladung, insbesondere eine statische Ableitung, einer statischen Aufladung des Strahlgeräts, insbesondere des Gehäuses, erreicht werden. Insbesondere bei einer metallischen Ausbildung des Funktionsprofils kann insbesondere vorteilhaft eine Entladung, insbesondere eine statische Ableitung, einer statischen Aufladung des Strahlgeräts, insbesondere des Gehäuses, erreicht werden. Bei einer Ausbildung des Funktionsprofils aus Kunststoff, insbesondere als Kunststoff-Strangpressprofil, kann eine statische Entladung, insbesondere eine statische Ableitung, einer statischen Aufladung des Strahlgeräts, insbesondere des Gehäuses, durch die Verwendung eines leitfähigen Kunststoffs erreicht werden.

Grundsätzlich wäre jedoch auch denkbar, dass das Funktionsprofil an das Gehäuse angespritzt ist. Hierdurch könnte eine vorteilhaft hohe Funktionsdichte erreicht werden. Ferner könnte dadurch ein vorteilhaft geringer Herstellaufwand erreicht werden.

Ferner wird vorgeschlagen, dass das Funktionsprofil zumindest eine Scharniernut zu einer Aufnahme eines Scharnierprofils einer Schutzklappe, die in zumindest einem Betriebszustand zu einem Abdecken eines Öffnungsbereichs der zumindest einen Strahlkammer vorgesehen ist, aufweist. Vorzugsweise ist die Scharniernut von einer, in einem Querschnitt betrachtet, zumindest annähernd kreisförmigen Nut gebildet, welche in einem begrenzten Kreissegment geöffnet ist. Unter einem "Scharnierprofil" soll in diesem Zusammenhang insbesondere ein vorzugsweise zumindest teilweise bewegliches Profil verstanden werden, über welches die Schutzklappe definiert gegenüber dem Funktionsprofil bewegt, insbesondere verschwenkt, werden kann. Vorzugsweise soll darunter insbesondere ein Profil verstanden werden, über welches die Schutzklappe definiert aufgeklappt und zugeklappt werden kann. Unter einer "Schutzklappe" soll in diesem Zusammenhang insbesondere eine Klappe und/oder ein Deckel verstanden werden, mittels derer der Öffnungsbereich, insbesondere während eines Betriebs, zumindest teilweise abgedeckt werden kann. Vorzugsweise ist die Klappe dazu vorgesehen während eines Betriebs ein Austreten von Strahlgut aus der Strahlkammer über den Öffnungsbereich zumindest zu begrenzen, vorzugsweise zu verhindern. Besonders bevorzugt ist die Klappe zumindest teilweise transparent und dient als Sichtfenster für einen Bediener. Über die Schutzklappe kann ein Bediener während eines Betriebs in die Strahlkammer sehen. Dabei soll der Ausdruck "transparent" insbesondere eine Eigenschaft einer Lichtdurchlässigkeit eines Werkstoffs bzw. eines Bauteils definieren, wobei der Werkstoff bzw. das Bauteil insbesondere zumindest mehr als 10 %, bevorzugt mehr als 50 % und besonders bevorzugt mehr als 80 % eines Spektralbereichs eines sichtbaren Lichts durchlässt. Vorzugsweise weist der Spektralbereich des sichtbaren Lichts eine Wellenlänge λ von ungefähr 350 nm bis 800 nm auf. Besonders bevorzugt ist ein Gegenstand, der, zumindest entlang einer Richtung betrachtet, vollständig von dem transparenten Bauteil verdeckt ist, für einen Bediener bei einem Blick entlang einer Richtung, die das transparente Bauteil und den Gegenstand schneidet, sichtbar. Dadurch kann insbesondere ein vorteilhaft einfaches Öffnen des Öffnungsbereichs ermöglicht werden. Ferner kann eine sinnvolle und zuverlässige Befestigung der Schutzklappe erreicht werden. Zudem kann eine schnelle und einfache Montage der Schutzklappe bzw. des Scharnierprofils ermöglicht werden. Insbesondere kann dadurch auf eine Verschraubung des Scharnierprofils an dem Funktionsprofil verzichtet werden.

Des Weiteren wird vorgeschlagen, dass das Scharnierprofil der Schutzklappe zumindest teilweise elastisch ausgebildet ist. Vorzugsweise besteht das Scharnierprofil zumindest teilweise aus einem elastischen Material. Bevorzugt besteht das Scharnierprofil der Schutzklappe zumindest teilweise aus einem Elastomer. Besonders bevorzugt weist das Scharnierprofil an einer Seite eine Wulst auf, welche in der Scharniernut des Funktionsprofils geführt ist. Vorzugsweise ist die Wulst in der Scharniernut teilweise drehbar gelagert. Besonders bevorzugt ist das Scharnierprofil einstückig ausgebildet. Unter "zumindest teilweise elastisch" soll insbesondere verstanden werden, dass das Scharnierprofil zumindest in Teilbereichen wiederholt verformbar ist, ohne dass dadurch der Teilbereich oder das Scharnierprofil mechanisch beschädigt oder zerstört wird, und dass der Teilbereich oder das Scharnierprofil insbesondere nach einer Verformung selbstständig wieder einer Grundform zustrebt. Vorzugsweise soll darunter insbesondere verstanden werden, dass das Scharnierprofil zumindest in Teilbereichen ein Elastizitätsmodul von weniger als 10 GPa, vorzugsweise von weniger als 1 GPa, bevorzugt weniger als 0,5 GPa und besonders bevorzugt weniger als 0,1 GPa aufweist. Dadurch kann vorteilhaft auf ein Gelenk verzichtet werden. Vorzugsweise kann eine Beweglichkeit des Scharnierprofils über eine Beweglichkeit des Materials realisiert werden. Ferner kann eine vorteilhaft einfache Montage erreicht werden. Des Weiteren kann dadurch ein Scharnier mit einer Vielzahl von Freiheitsgraden erreicht werden. Insbesondere können durch die zumindest teilweise elastische Ausbildung des Scharnierprofils vorteilhaft Höhenunterschiede und/oder Toleranzen ausgeglichen werden. Vorzugsweise kann so eine vorteilhafte Abdichtung der Schutzklappe erreicht werden.

Eine entsprechende Ausbildung der Schutzklappe, insbesondere des Scharnierprofils, ist hierbei nicht grundsätzlich auf ein Strahlgerät gemäß dem Patentanspruch 1 und/oder ein Funktionsprofil gemäß dem Patentanspruch 9 beschränkt. Die Verwendung einer entsprechenden Schutzklappe, insbesondere eines entsprechenden Scharnierprofils, wäre grundsätzlich auch bei einem alternativen Strahlgerät, insbesondere Dentalstrahlgerät, denkbar.

Zudem wird vorgeschlagen, dass die Schutzklappe zumindest eine Scheibe aufweist und das Scharnierprofil der Schutzklappe zumindest einen Aufnahmebereich aufweist, in welchem die Scheibe klemmend aufgenommen ist. Vorzugsweise ist der Aufnahmebereich als Kantenschutzprofil ausgebildet. Besonders bevorzugt ist der Aufnahmebereich als Kantenschutzprofil mit einem Metallprofil ausgebildet. Vorzugsweise ist der Aufnahmebereich auf einer dem Funktionsprofil abgewandten Seite des Scharnierprofils angeordnet. Unter einer "Scheibe" soll in diesem Zusammenhang insbesondere eine lichtdurchlässige, insbesondere transparente Scheibe, vorzugsweise eine Glasscheibe, verstanden werden. Es sind verschiedene, einem Fachmann als sinnvoll erscheinende Glasscheiben denkbar, wie beispielsweise Plexiglasscheiben, Acrylglasscheiben und/oder Silikat-Glasscheiben. Ferner soll in diesem Zusammenhang unter "klemmend aufgenommen" insbesondere verstanden werden, dass die Scheibe in zumindest eine Richtung zumindest im Wesentlichen kraftschlüssig in dem Aufnahmebereich gegen ein Herausfallen gehalten ist. Vorzugsweise ist die Scheibe zumindest im Wesentlichen kraftschlüssig gegen ein Herausziehen in eine einer Einsteckrichtung entgegengesetzten Richtung gesichert. Dabei soll unter "zumindest im Wesentlichen kraftschlüssig" insbesondere verstanden werden, dass zumindest 50%, vorzugsweise zumindest 70% und besonders bevorzugt zumindest 90% einer Haltekraft kraftschlüssig aufgebracht wird. Des Weiteren soll in diesem Zusammenhang unter einem "Kantenschutzprofil" insbesondere ein Profil verstanden werden, welches dazu vorgesehen ist, auf eine Seitenkante einer Scheibe aufgesteckt zu werden. Vorzugsweise soll darunter insbesondere ein Profil mit einer zumindest annähernd U-förmigen Querschnittsform verstanden werden. Bevorzugt soll darunter insbesondere ein Profil mit einem U-förmigen Gerüstband, welches vorzugsweise zumindest teilweise aus einem Metall besteht, und mit einer das Gerüstband umgebenden Ummantelung, welche zumindest teilweise aus einem Elastomer besteht, verstanden werden. Dadurch kann insbesondere eine vorteilhaft einfache Montage der Scheibe an dem Scharnierprofil erreicht werden. Ferner kann auf Bohrungen in der Scheibe verzichtet werden. Zudem kann ein einfacher Wechsel der Scheibe ermöglicht werden.

Eine entsprechende Ausbildung der Schutzklappe, insbesondere des Scharnierprofils, ist hierbei nicht grundsätzlich auf ein Strahlgerät gemäß dem Patentanspruch 1 und/oder ein Funktionsprofil gemäß dem Patentanspruch 9 beschränkt. Die Verwendung einer entsprechenden Schutzklappe, insbesondere eines entsprechenden Scharnierprofils, wäre grundsätzlich auch bei einem alternativen Strahlgerät, insbesondere Dentalstrahlgerät denkbar.

Es wird ferner vorgeschlagen, dass das Strahlgerät zumindest eine Beleuchtungseinheit aufweist, die zumindest teilweise in das Funktionsprofil integriert ist. Vorzugsweise ist die Beleuchtungseinheit zumindest teilweise an dem Funktionsprofil gegenüber der Strahlkammer abgedichtet. Bevorzugt dient das Funktionsprofil als Kühlkörper der Beleuchtungseinheit. Hierbei wäre grundsätzlich denkbar, dass an das Funktionsprofil zusätzliche Kühlrippen angeformt sind, um eine hohe Kühlwirkung zu erreichen. Bevorzugt dient das Funktionsprofil zudem zumindest teilweise zu einer Aufnahme einer Elektronik der Beleuchtungseinheit. Unter einer "Beleuchtungseinheit" soll hier insbesondere eine Einheit verstanden werden, die zumindest zu einer Ausleuchtung der Strahlkammer vorgesehen ist. Besonders bevorzugt weist die Beleuchtungseinheit hierbei zumindest ein Beleuchtungselement auf, das als LED ausgebildet ist. Ferner soll in diesem Zusammenhang unter "zumindest teilweise integriert" insbesondere verstanden werden, dass zumindest Teile der Beleuchtungseinheit zumindest teilweise innerhalb einer Außenkontur des Funktionsprofils angeordnet sind. Dadurch kann vorteilhaft eine vorteilhafte Beleuchtungseinheit bereitgestellt werden. Ferner kann insbesondere eine vorteilhaft einfache und schnelle Montage erreicht werden. Vorzugsweise kann die Beleuchtungseinheit bereits gemeinsam mit dem Funktionsprofil montiert werden.

Es wird weiter vorgeschlagen, dass das Strahlgerät zumindest ein in der zumindest einen Strahlkammer angeordnetes Bodengitter aufweist, welches zumindest einen integrierten Aufnahmeköcher aufweist, der dazu vorgesehen ist, ein Handstück in einer Parkposition zu halten. Vorzugsweise wird das Handstück in dem Aufnahmeköcher in einer definierten Parkposition gehalten. Besonders bevorzugt wird das Handstück in dem Aufnahmeköcher in einer ergonomischen Parkposition gehalten. Vorzugsweise weist der Aufnahmeköcher einen integrierten Durchstrahlschutz auf. Bevorzugt ist das Bodengitter entnehmbar. Besonders bevorzugt ist das Bodengitter lose in der Strahlkammer angeordnet. Grundsätzlich wäre jedoch auch denkbar, dass das Bodengitter einstückig mit dem Gehäuse ausgebildet ist. Grundsätzlich wäre denkbar, dass das Bodengitter an das Gehäuse angespritzt ist. Es wäre auch denkbar, dass das Bodengitter in das Gehäuse eingedruckt ist. Unter einer "ergonomischen Parkposition" soll in diesem Zusammenhang insbesondere eine Position des Handstücks verstanden werden, in welche das Handstück gebracht werden kann, wenn es nicht benötigt wird. Vorzugsweise soll darunter insbesondere eine Position verstanden werden, in welcher das Handstück in einem von einem Arbeitsbereich differierenden Bereich der Strahlkammer angeordnet ist und insbesondere auch ein Schlauch des Handstücks zumindest teilweise in einen Bereich der Strahlkammer gedrückt wird, der von einem Arbeitsbereich differiert. Dadurch kann insbesondere ein hoher Arbeitskomfort erreicht werden. Ferner kann eine Anzahl an Bauteilen gering gehalten werden.

Das erfindungsgemäße Strahlgerät soll hierbei nicht auf die oben beschriebene Anwendung und Ausführungsform beschränkt sein. Insbesondere kann das erfindungsgemäße Strahlgerät zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Strahlgerät mit einer Strahlkammer, mit einem Gehäuse, mit zwei Strahlguttankeinheiten und mit einer teilweise transparent dargestellten Schutzklappe in einer schematischen, perspektivischen Darstellung,
- Fig. 2: das Strahlgerät mit der Strahlkammer, mit dem Gehäuse, mit den zwei Strahlguttankeinheiten und mit der Schutzklappe in einer alternativen schematischen, perspektivischen Darstellung von hinten,
- Fig. 3: das Strahlgerät mit der Strahlkammer, mit dem Gehäuse, mit den zwei Strahlguttankeinheiten und mit der Schutzklappe in einem geöffneten Zustand, in einer schematischen Draufsicht,
- Fig. 4: das Strahlgerät mit der Strahlkammer, mit dem Gehäuse, mit den zwei Strahlguttankeinheiten und mit der Schutzklappe in einer alternativen schematischen, perspektivischen Darstellung von unten und
- Fig. 5: das Strahlgerät in einer schematischen Schnittdarstellung entlang der Schnittline V-V.

### Beschreibung des Ausführungsbeispiels

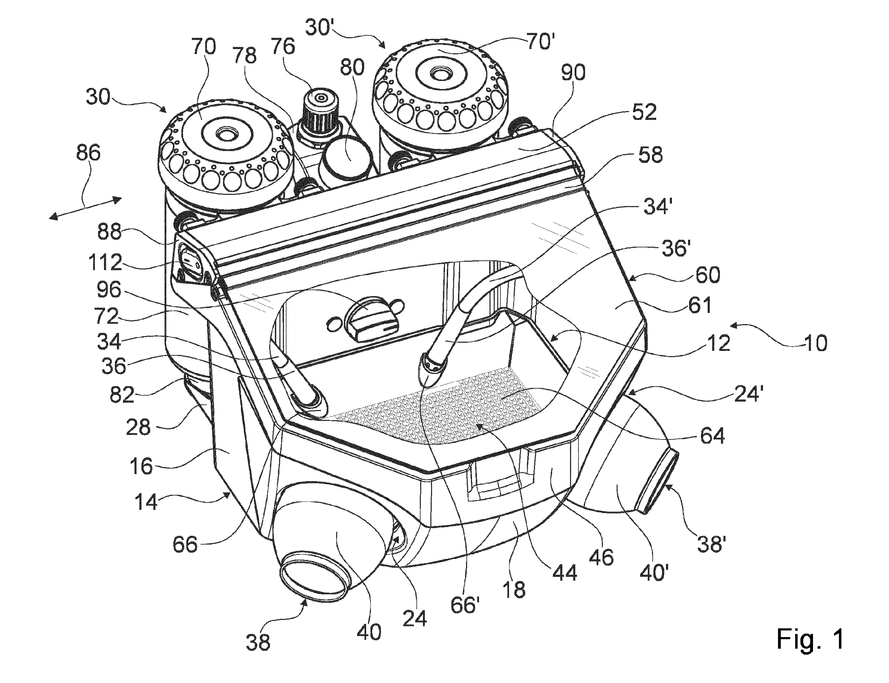

Die Figuren 1 bis 2 zeigen ein Strahlgerät 10. Das Strahlgerät 10 ist als Dentalstrahlgerät ausgebildet. Das Strahlgerät 10 dient zur Bearbeitung von Dentalprodukten. Das Strahlgerät 10 ist für eine Bearbeitung der Dentalprodukte mit Strahlgut vorgesehen. Das Strahlgerät 10 arbeitet dabei nach einem Sandstrahlprinzip, bei dem das Strahlgut durch Druckluft beschleunigt wird und beim Auftreffen auf das Dentalprodukt Abtragungen an dessen Oberfläche bewirkt.

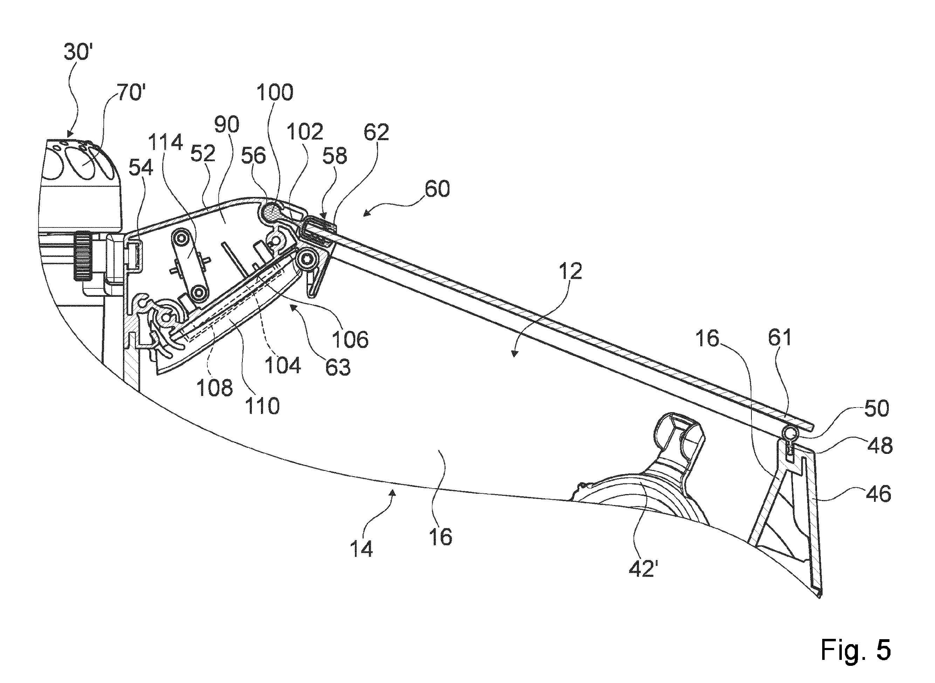

Das Strahlgerät 10 umfasst eine Strahlkammer 12 und ein Gehäuse 14. Das Gehäuse 14 weist einen Grundkörper 16 auf, der die Strahlkammer 12 teilweise umgibt. Der Grundkörper 16 begrenzt die Strahlkammer 12. Der Grundkörper 16 ist als ein nach oben hin geöffneter Behälter ausgebildet, welcher die Strahlkammer 12 definiert. Die Strahlkammer 12 weist eine sechseckige Kontur auf. Ferner weist das Gehäuse 14 an einem Öffnungsbereich 44 der Strahlkammer 12 an einer Oberkante des Grundkörpers 16 einen Versteifungskragen 46 auf. Der Versteifungskragen 46 bildet ein Teil des Grundkörpers 16. Der Versteifungskragen 46 dient zu einer Versteifung und Stabilisierung des Grundkörpers 16. Ferner ist der Versteifungskragen 46 von einem umlaufenden falzartiger Kragen mit einem annähernd U-förmigen Querschnitt gebildet. Der Öffnungsbereich 44 bildet einen Bereich einer Zuführ- und Entnahmeöffnung der Strahlkammer 12, über welche zu bearbeitende Produkte, insbesondere Dentalprodukte, vor und nach einem Betrieb der Strahlkammer 12 zugeführt werden können bzw. aus der Strahlkammer 12 entnommen werden können. Das Gehäuse 14 des Strahlgeräts 10 besteht aus Kunststoff. Das Gehäuse 14 besteht aus einem ABS-Kunststoff. Das Gehäuse 14 ist zumindest teilweise in einem Spritzgussverfahren hergestellt. Das Gehäuse 14 ist vollständig in einem Spritzgussverfahren hergestellt. Das Gehäuse 14 ist in einem Thermoplast-Spritzgussverfahren hergestellt (Figur 1, 5).

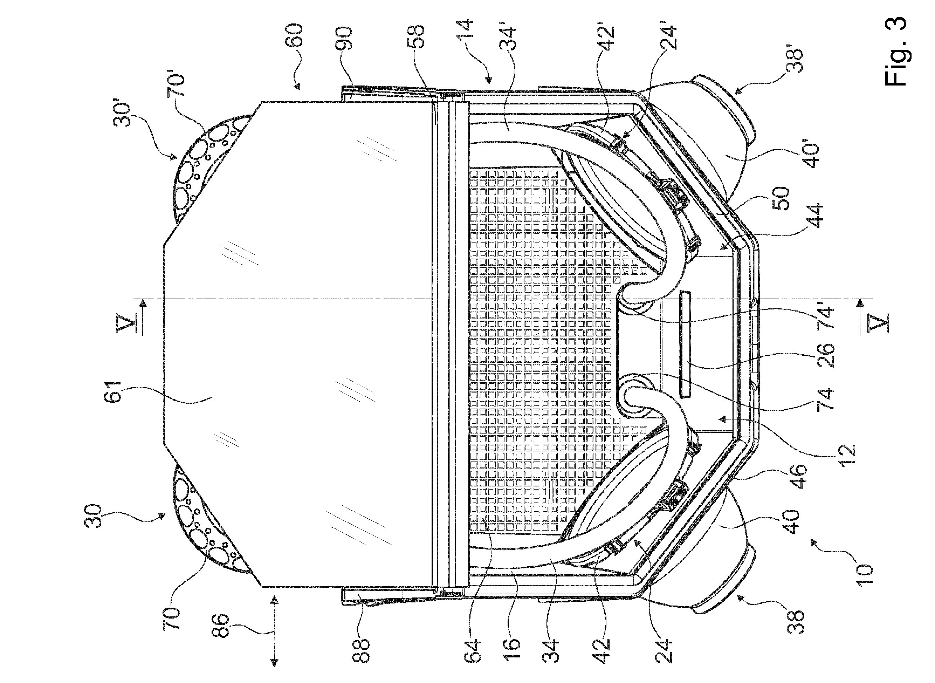

Das Gehäuse 14 weist zwei Handöffnung 24, 24' auf, über welche ein Bediener während eines Betriebs in die Strahlkammer 12 greifen kann. Die Handöffnungen 24, 24' sind in den Grundkörper 16 eingebracht. Die Handöffnungen 24, 24' sind jeweils an einer einem Bediener zugewandten Vorderseite des Grundkörpers 16 angeordnet. Das Strahlgerät 10 weist zwei Handstulpeneinheiten 38, 38' auf. Die Handstulpeneinheiten 38, 38' sind jeweils in einer der Handöffnungen 24, 24' angeordnet. Die Handstulpeneinheiten 38, 38' sind dazu vorgesehen, einen ungewollten Austritt von Strahlgut aus den Handöffnungen 24, 24' zu verhindern. Die Handstulpeneinheiten 38, 38' weisen jeweils eine Stulpe 40, 40' auf. Die Stulpen 40, 40' sind jeweils von einem röhrenförmigen Element aus Stoff gebildet, dass auf einer freien Seite einen Gummizug aufweist. Die Stulpen 40, 40' sind dazu vorgesehen während eines Betriebs an den Armen eines Bedieners anzuliegen. Grundsätzlich wäre jedoch auch eine andere, einem Fachmann als sinnvoll erscheinende Ausgestaltung des Stulpens 40, 40' denkbar. Ferner weisen die Handstulpeneinheiten 38, 38' jeweils einen Befestigungsring 42, 42' auf. Die Befestigungsringe 42, 42' sind dazu vorgesehen, die zugehörigen Stulpen 40, 40' in den Handöffnungen 24, 24' zu befestigen. Die Handstulpeneinheiten 38, 38' sind über die Befestigungsringe 42, 42' jeweils bajonettverschlussartig mit dem Gehäuse 14 lösbar verbunden. Die Handstulpeneinheiten 38, 38' sind über die Befestigungsringe 42, 42' jeweils bajonettverschlussartig mit dem Grundkörper 16 des Gehäuses 14 lösbar verbunden. Die Befestigungsringe 42, 42' können dazu an nicht weiter sichtbaren Befestigungsausnehmungen befestigt werden, die um die Handöffnungen 24, 24' in dem Grundkörper 16 des Gehäuses 14 angeordnet sind (Figur 3).

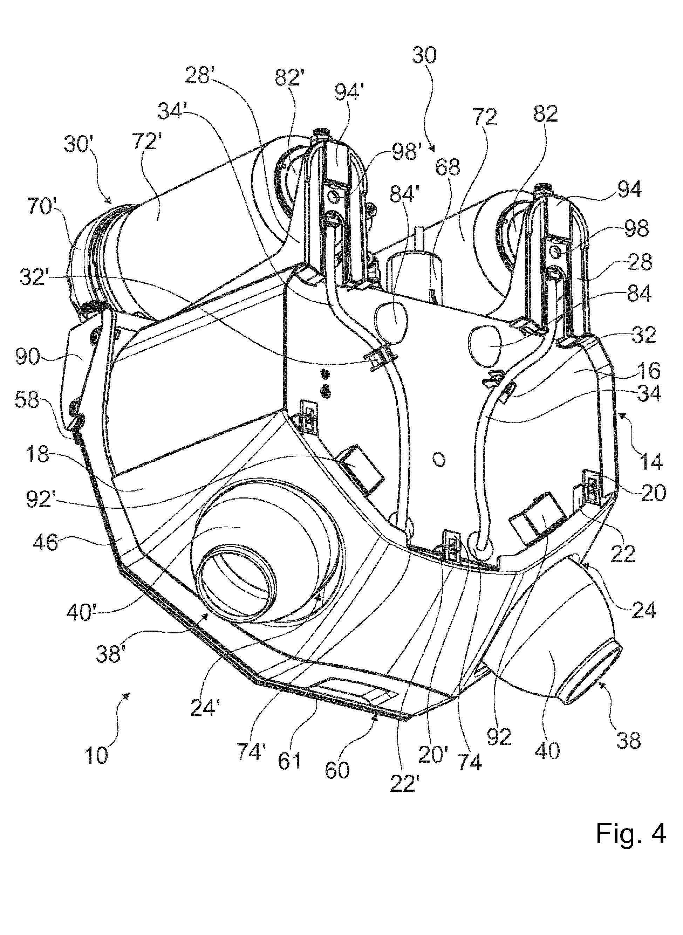

Ferner weist das Strahlgerät 10 eine Frontschürze 18 auf. Die Frontschürze 18 ist fest mit dem Gehäuse 14 verbunden. Ferner ist die Frontschürze 18 dazu vorgesehen, einen Teilbereich des Gehäuses 14 abzudecken. Die Frontschürze 18 ist dazu vorgesehen, einen Teilbereich des Grundkörpers 16 des Gehäuses 14 abzudecken. Die Frontschürze 18 deckt in einem montierten Zustand eine einem Bediener zugewandte Vorderseite des Grundkörpers 16 ab. Die Frontschürze 18 weist in einem Bereich der Handöffnungen 24, 24' des Gehäuses 14 Aussparungen auf, die mit den Handöffnungen 24, 24' korrespondieren. Die Frontschürze 18 liegt direkt an den Handöffnungen 24, 24' an. Die Frontschürze 18 besteht aus Kunststoff. Die Frontschürze 18 besteht aus einem ABS-Kunststoff. In einem montierten Zustand der Frontschürze 18 ist die Frontschürze 18 über eine wesentliche Erstreckung zu dem Grundkörper 16 beabstandet. Zwischen der Frontschürze 18 und dem Grundkörper 16 befindet sich ein Luftpolster. Hierdurch kann vorteilhaft eine Schalldämpfung erreicht werden. Die Frontschürze 18 ist von außen mit dem Gehäuse 14 verrastet. Die Frontschürze 18 weist drei Rastelemente 20, 20', 20" auf, welche mit jeweils einem korrespondierenden Rastelement 22, 22', 22" des Gehäuses 14 verrasten. Die Rastelemente 20, 20', 20" der Frontschürze 18 sind an einer Unterkante der Frontschürze 18 angeordnet. Die korrespondierenden Rastelemente 22, 22', 22" des Gehäuses 14 sind an einer Unterseite des Grundkörpers 16 angeordnet. Grundsätzlich wäre jedoch auch eine differierende, einem Fachmann als sinnvoll erscheinende Anzahl und/oder Anordnung der Rastelemente 20, 20', 20", 22, 22', 22" denkbar (Figur 4).

Des Weiteren weist das Gehäuse 14 eine von den Handöffnungen 24, 24' differierende Lüftungsöffnung 26 auf. Die Lüftungsöffnung 26 ist in den Grundkörper 16 eingebracht. Die Lüftungsöffnung 26 ist an einer einem Bediener zugewandten Vorderseite des Grundkörpers 16 zwischen den Handöffnungen 24, 24' angeordnet. Über die Lüftungsöffnung 26 kann kontrolliert Luft in die Strahlkammer 12 gelangen. Über die Lüftungsöffnung 26 wird Luft in die Strahlkammer 12 gesaugt. Ferner weist das Gehäuse 14 an einer Rückseite des Grundkörpers 16 eine Absaugöffnung 68 auf, über welche Luft und Strahlgut aus der Strahlkammer 12 angesaugt werden kann. An die Absaugöffnung 68 wird in einem Betrieb vorzugsweise eine nicht weiter sichtbare Absaugung angeschlossen. Das Gehäuse 14 weist die mit dem Grundkörper 16 des Gehäuses 14 teilweise einstückig ausgebildete Absaugöffnung 68 auf. Die Absaugöffnung 68 weist ein Führungsrohr auf. Das Führungsrohr der Absaugöffnung 68 begrenzt die eigentliche Öffnung der Absaugöffnung 68. Das Führungsrohr ist an den Grundkörper 16 des Gehäuses 14 angespritzt. Über die Lüftungsöffnung 26 kann demnach zur Vermeidung eines Unterdrucks dieselbe Menge Luft in die Strahlkammer 12 gesaugt werden, wie sie über die Absaugöffnung 68 abgesaugt wird. Die Lüftungsöffnung 26 wird in einem montierten Zustand der Frontschürze 18 von der Frontschürze 18 verdeckt. Von außen gesehen ist eine Sicht auf die Lüftungsöffnung 26 durch die Frontschürze 18 verdeckt. Die Lüftungsöffnung 26 ist zu der Frontschürze 18 beabstandet (Figur 3, 5).

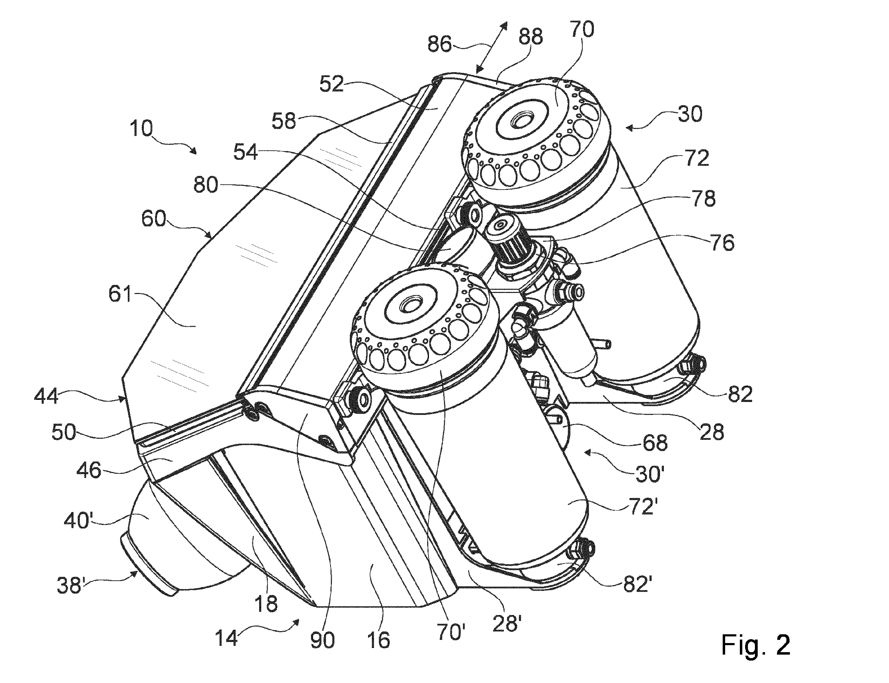

Das Gehäuse 14 weist ferner zwei mit dem Grundkörper 16 des Gehäuses 14 einstückig ausgebildete Auslegereinheiten 28, 28' auf. Die Auslegereinheiten 28, 28' sind an den Grundkörper 16 angespritzt. Die Auslegereinheiten 28, 28' sind auf einer der Frontschürze 18 gegenüberliegenden Seite des Grundkörpers 16 angeordnet. Die Auslegereinheiten 28, 28' kragen stegförmig, annähernd senkrecht aus dem Grundkörper 16 aus. Ferner sind die Auslegereinheiten 28, 28' zu einer unteren Aufnahme jeweils einer Strahlguttankeinheit 30, 30' vorgesehen. Die zwei Strahlguttankeinheiten 30, 30' liegen auf den zwei Auslegereinheiten 28, 28' auf. Die Auslegereinheiten 28, 28' weisen jeweils eine Nut auf, über welche die Strahlguttankeinheiten 30, 30' auf den Auslegereinheiten 28, 28' positioniert werden. Ferner weisen die Auslegereinheiten 28, 28' des Gehäuses 14 jeweils eine Ausnehmung 98, 98' auf. Die Ausnehmungen 98, 98' sind jeweils zu einer lateralen Sicherung der zugehörigen Strahlguttankeinheit 30, 30' vorgesehen. Die Ausnehmungen 98, 98' sind jeweils zu einer lateralen Sicherung der zugehörigen Strahlguttankeinheit 30, 30' dazu vorgesehen, einen nicht weiter sichtbaren Fortsatz der zugehörigen Strahlguttankeinheit 30, 30' aufzunehmen. Die Ausnehmungen 98, 98' nehmen jeweils einen Fortsatz einer Mischeinheit 82, 82' der zugehörigen Strahlguttankeinheit 30, 30' auf. Ferner dienen die Auslegereinheiten 28, 28' zudem zu einer Abstützung des Grundkörpers 16. Hierdurch kann eine hohe Stabilität sowie ein Kippschutz erreicht werden (Figur 2).

Die zwei Strahlguttankeinheiten 30, 30' sind auf einer der Frontschürze 18 gegenüberliegenden Seite des Grundkörpers 16 angeordnet. Die Strahlguttankeinheiten 30, 30' sind lösbar mit einem Gehäuse 14 des Strahlgeräts 10 verbunden. Beide Strahlguttankeinheiten 30, 30' umfassen jeweils einen Tankdeckel 70, 70' und einen Tankbehälter 72, 72'. Die Tankbehälter 72, 72' sind zu einer Aufnahme von Strahlgut vorgesehen. Jede der Strahlguttankeinheiten 30, 30' ist mittels eines Schlauchs 34, 34' mit einem Handstück 36, 36' verbunden. Die Handstücke 36, 36' weisen jeweils an einem vorderen, dem Schlauch 34, 34' abgewandten Ende eine Düse auf. Strahlgut, welches sich in den entsprechenden Strahlguttankeinheiten 30, 30' befindet, wird als Strahlgut-Luft-Gemisch über die Schläuche 34, 34' zu dem Handstück 36, 36' in die Strahlkammer 12 geführt. Über die Düsen an den Handstücken 36, 36' tritt das Strahlgut-Luft-Gemisch jeweils fokussiert als Strahl aus dem jeweils aktuell genutzten Handstück 36, 36' aus. Die Schläuche 34, 34' werden dazu an einer Unterseite des Grundkörpers 16 des Gehäuses 14 geführt und jeweils über eine Schlauchöffnung 74, 74' in einem Boden des Grundkörpers 16 in die Strahlkammer 12 geführt. In den Schlauchöffnungen 74, 74' sind jeweils Gummimuffen angeordnet, die ein Herausfallen von Strahlgut aus der Strahlkammer 12 verhindern sollen. Die Strahlguttankeinheiten 30, 30' stehen in einem Betrieb unter einem Überdruck. Dieser Überdruck kann von einem Bediener über eine Einstelleinheit 76 variiert und eingestellt werden. Die Einstelleinheit 76 ist von einem Druckminderer gebildet. Mittels der Einstellung des Überdrucks in den Strahlguttankeinheiten 30, 30' kann eine Strahlenergie des Strahlgut-Luft-Gemischs, welches aus einer Düse eines der Handstücke 36, 36' austritt, eingestellt werden.

Die Einstelleinheit 76 ist an einer weiteren Auslegereinheit 78 angeordnet. Das Gehäuse 14 weist die weitere Auslegereinheit 78 auf. Die Auslegereinheit 78 ist einstückig mit dem Grundkörper 16 des Gehäuses 14 ausgebildet. Die Auslegereinheit 78 ist an den Grundkörper 16 angespritzt. Die Auslegereinheit 78 ist auf einer der Frontschürze 18 gegenüberliegenden Seite des Grundkörpers 16 angeordnet. Die Auslegereinheit 78 kragt stegförmig, annähernd senkrecht aus dem Grundkörper 16 aus. Die Auslegereinheit 78 ist zwischen den zwei Strahlguttankeinheiten 30, 30' angeordnet. Die Auslegereinheit 78 ist zu einer Aufnahme der Einstelleinheit 76 zu einer Einstellung eines Drucks der Strahlguttankeinheiten 30, 30' vorgesehen. Ferner ist an der Auslegereinheit 78 eine Drucksensoreinheit 80 zum Ablesen und Überwachen eines eingestellten Überdrucks in den Tankbehältern 72, 72' der Strahlguttankeinheiten 30, 30' angeordnet. Die Tankbehälter 72, 72' der Strahlguttankeinheiten 30, 30' weisen jeweils einen Innenraum auf, der das Strahlgut aufnimmt. Zudem ist in dem Innenraum der Strahlguttankeinheiten 30, 30' jeweils Luft angeordnet, die in einem Betrieb im Vergleich zu einer Umgebung der Strahlguttankeinheiten 30, 30' unter einem Überdruck steht. Die Drucksensoreinheit 80 sensiert den Wert des Überdrucks und gibt diesen Wert über eine Ausgabeeinheit an einen Bediener weiter (Figur 2, 4).

Die Strahlguttankeinheiten 30, 30' weisen ferner jeweils zwei Anschlusselemente auf. Die Strahlguttankeinheiten 30, 30' weisen jeweils ein erstes Anschlusselement und jeweils ein zweites Anschlusselement auf. Die ersten Anschlusselemente bilden jeweils einen Drucklufteingang der zugehörigen Strahlguttankeinheit 30, 30' aus. Die ersten Anschlusselemente sind für einen Anschluss an ein nicht näher dargestelltes geräteinternes Druckluftversorgungssystem des Dentalstrahlgeräts vorgesehen. Die zweiten Anschlusselemente bilden jeweils einen Anschluss für den Schlauch 34, 34' des zugehörigen Handstücks 36, 36' aus. Die zweiten Anschlusselemente bilden somit jeweils einen Ausgang für das Luft-Strahlgut-Gemisch aus. Zur Vermischung der über die ersten Anschlusselemente in die Strahlguttankeinheiten 30, 30' eingeleiteten Druckluft mit dem Strahlgut, das in dem Innenraum der Strahlguttankeinheiten 30, 30' bevorratet ist, umfassen die Strahlguttankeinheiten 30, 30' jeweils eine Mischeinheit 82, 82'. Die Mischeinheiten 82, 82' sind in einem Bodenbereich der Strahlguttankeinheiten 30, 30' angeordnet und bilden einen Boden der Tankbehälter 72, 72' aus. Die Mischeinheiten 82, 82' und die Tankbehälter 72, 72' sind jeweils über eine Schraubverbindung miteinander verbunden und können beschädigungsfrei voneinander gelöst werden (Figur 2, 4). Während eines Betriebs kann lediglich eine der Strahlguttankeinheiten 30, 30' gleichzeitig verwendet werden. Um zwischen den Strahlguttankeinheiten 30, 30' und damit den Handstücken 36, 36' wechseln zu können, ist an einer der Frontschürze 18 abgewandten Rückwand des Grundkörpers 16 des Gehäuses 14 in der Strahlkammer 12 ein Schalter 96 angeordnet, über welchen zwischen den Strahlguttankeinheiten 30, 30' bzw. den Handstücken 36, 36' gewechselt werden kann. Die Strahlguttankeinheiten 30, 30' können jeweils mit unterschiedlichem Strahlgut gefüllt werden (Figur 1).

Des Weiteren weist das Gehäuse 14 zwei mit dem Grundkörper 16 des Gehäuses 14 einstückig ausgebildete Schlauchhalterungen 32, 32' auf. Die Schlauchhalterungen 32, 32' sind an einer Unterseite des Grundkörpers 16 an den Grundkörper 16 angespritzt. Die Schlauchhalterungen 32, 32' sind jeweils von zweiarmigen Klammern gebildet, die dazu vorgesehen sind, einen Schlauch 34, 34' teilweise zu umgreifen. Die Schlauchhalterungen 32, 32' sind dazu vorgesehen, die Schläuche 34, 34' der Handstücke 36, 36' an einer Unterseite des Gehäuses 14 zu führen. Die Schlauchhalterungen 32, 32' sind dazu vorgesehen, die Schläuche 34, 34' der Handstücke 36, 36' an einer Unterseite des Gehäuses 14 zu positionieren. Jeder der zwei Schläuche 34, 34' der Handstücke 36, 36' ist in jeweils einer der Schlauchhalterungen 32, 32' lösbar einzuklemmen. Grundsätzlich ist jedoch auch eine andere, einem Fachmann als sinnvoll erscheinende Anzahl und/oder Ausgestaltung der Schlauchhalterungen 32, 32' denkbar (Figur 4).

Ferner weist das Strahlgerät 10 ein in der Strahlkammer 12 angeordnetes Bodengitter 64 auf. Das Bodengitter 64 ist auf einem Boden der Strahlkammer 12 lose aufgelegt. Das Bodengitter 64 besteht aus Kunststoff. Das Bodengitter 64 weist in einem mittleren Bereich eine Gitterstruktur auf, über welche Strahlgut auf den Boden der Strahlkammer 12 durchfallen kann. Auf dem Boden der Strahlkammer 12 wird das Strahlgut vorzugsweise über die Absaugöffnung 68 abgesaugt. Das Bodengitter 64 weist zwei integrierte Aufnahmeköcher 66, 66' auf. Die Aufnahmeköcher 66, 66' des Bodengitters 64 sind in einem hinteren, den Handöffnungen 24, 24' abgewandten Bereich der Strahlkammer 12, in einem Randbereich des Bodengitters 64 angeordnet. Die Aufnahmeköcher 66, 66' sind dazu vorgesehen, jeweils ein Handstück 36, 36' des Strahlgeräts 10 in einer Parkposition zu halten. Die Aufnahmeköcher 66, 66' sind dazu vorgesehen, die Handstücke 36, 36' des Strahlgeräts 10 in einer definierten, ergonomischen Parkposition zu halten. In der ergonomischen Parkposition sind die Handstücke 36, 36' in einem von einem Arbeitsbereich differierenden Bereich der Strahlkammer 12 angeordnet. Ferner wird in der ergonomischen Parkposition ein Schlauch 34, 34' des jeweiligen Handstücks 36, 36' in einen Bereich der Strahlkammer 12 gedrückt, der von einem Arbeitsbereich differiert. In der ergonomischen Parkposition sind die Handstücke 36, 36' in einem hinteren, den Handöffnungen 24, 24' abgewandten Bereich des Strahlkammer 12 angeordnet. Die Handstücke 36, 36' sind in der Parkposition, von einer Vorderseite des Strahlgeräts 10 aus betrachtet, nebeneinander angeordnet. Ferner sind die Handstücke 36, 36' in der Parkposition mit einem hinteren Ende, mit welchem die Handstücke 36, 36' mit dem jeweils zugeordneten Schlauch 34, 34' verbunden sind, voneinander weg in Richtung der jeweils näher liegenden Seitenwand geneigt. Hierdurch kann vorteilhaft ein Schlauch 34, 34' des jeweiligen Handstücks 36, 36' an einem Rand der Strahlkammer 12 geführt werden. Ferner weist der Boden des Grundkörpers 16 zwei Vertiefungen 84, 84' auf, in welche jeweils eines der Handstücke 36, 36' in einer Parkposition ragt. Hierdurch können die Handstücke 36, 36' möglichst tief positioniert werden. Die Vertiefungen 84, 84' sind unterhalb der Aufnahmeköcher 66, 66' angeordnet. Ferner weisen die Aufnahmeköcher 66, 66' jeweils einen nicht weiter sichtbaren Durchstrahlschutz auf. Der Durchstrahlschutz ist jeweils in einem einer Aufnahmeöffnung abgewandten Ende der Aufnahmeköcher 66, 66' angeordnet. Der Durchstrahlschutz ist dazu vorgesehen, ein Zerstören der Aufnahmeköcher 66, 66' oder des Bodens des Grundkörpers 16 durch aus den Handstücken 36, 36' austretendes Strahlgut zu verhindern, wenn ein Bediener ein Handstück 36, 36', ohne ein Strahlgutaustritt zu deaktivieren, in den Aufnahmeköcher 66, 66' steckt. Grundsätzlich wäre auch denkbar, dass die Vertiefungen 84, 84' jeweils als Durchstrahlschutz verwendet werden, indem ein Strahlgut durch die Parkposition des Handstücks 36, 36' tangential in die Vertiefung 84, 84' eintritt und dadurch abgelenkt wird (Figur 1, 3).

Des Weiteren weist das Strahlgerät 10 ein Funktionsprofil 52 auf. Das Funktionsprofil 52 ist zu einer Stabilisierung des Gehäuses 14 fest mit dem zumindest einen Gehäuse 14 verbunden. Ferner dient das Funktionsprofil 52 zu einer sicheren Befestigung von Bauteilen. Das Funktionsprofil 52 ist auf der Oberkante des Grundkörpers 16 angeordnet. Das Funktionsprofil 52 ist auf einer der Frontschürze 18 abgewandten Seite des Grundkörpers 16 auf dem Versteifungskragen 46 angeordnet. Das Funktionsprofil 52 ist mit dem Gehäuse 14 verschraubt. Ferner ist das Funktionsprofil 52 als Strangpressprofil ausgebildet. Das Funktionsprofil 52 ist als Aluminium-Strangpressprofil ausgebildet. Grundsätzlich wäre jedoch auch denkbar, dass das Funktionsprofil 52 als Kunststoff-Strangpressprofil ausgebildet ist. Das Funktionsprofil 52 weist entlang einer Haupterstreckungsrichtung 86 einen konstanten Querschnitt auf. Das Funktionsprofil 52 ist an seinen beiden Enden jeweils mit einer Abdeckung 88, 90 abgedeckt. Die Abdeckungen 88, 90 sind jeweils an das Funktionsprofil 52 angeschraubt. Ferner schließen die Abdeckungen 88, 90 jeweils die Enden des Funktionsprofils 52 ab. Das Funktionsprofil 52 weist ferner eine Befestigungsnut 54 auf. Die Befestigungsnut 54 ist von einer T-Nut gebildet. Grundsätzlich wären jedoch auch andere, einem Fachmann als sinnvoll erscheinende Befestigungsnuten 54 denkbar. Die Befestigungsnut 54 erstreckt sich entlang der Haupterstreckungsrichtung 86 des Funktionsprofils 52 über eine gesamte Erstreckung des Funktionsprofils 52. Die Befestigungsnut 54 ist auf einer der Frontschürze 18 abgewandten Seite des Funktionsprofils 52 angeordnet. Die Befestigungsnut 54 ist zu einer Rückseite hin geöffnet. Die Befestigungsnut 54 dient zu einer Befestigung der Strahlguttankeinheiten 30, 30'. Die Strahlguttankeinheiten 30, 30' sind über jeweils zwei Schrauben an der Befestigungsnut 54 befestigt, die mit in der Befestigungsnut 54 geführten Vierkantmuttern verschraubt sind. Hierdurch können die Strahlguttankeinheiten 30, 30' vorteilhaft ausgerichtet werden. Vorzugsweise können die Strahlguttankeinheiten 30, 30' so vorteilhaft gegenüber den Auslegereinheiten 28, 28' ausgerichtet werden (Figur 2, 5).

Ferner weist das Funktionsprofil 52 eine Scharniernut 56 auf. Die Scharniernut 56 erstreckt sich entlang der Haupterstreckungsrichtung 86 des Funktionsprofils 52 über eine gesamte Erstreckung des Funktionsprofils 52. Die Scharniernut 56 ist auf einer der Frontschürze 18 zugewandten Seite des Funktionsprofils 52 angeordnet. Die Scharniernut 56 ist von einer, in einem Querschnitt betrachtet, zumindest annähernd kreisförmigen Nut gebildet, welche in einem begrenzten Kreissegment geöffnet ist. Die Scharniernut 56 ist zu einer Vorderseite hin geöffnet. Die Scharniernut 56 ist zu einer Aufnahme eines Scharnierprofils 58 einer Schutzklappe 60 vorgesehen. Die Schutzklappe 60 ist in einem Betriebszustand zu einem Abdecken des Öffnungsbereichs 44 der Strahlkammer 12 vorgesehen. Die Schutzklappe 60 ist während eines Betriebs zu einem Abdecken des Öffnungsbereichs 44 der Strahlkammer 12 vorgesehen. Die Schutzklappe 60 kann manuell von einem Bediener geöffnet oder geschlossen werden. Die Schutzklappe 60 soll während eines Betriebs ein Austreten von Strahlgut aus der Zuführ- und Entnahmeöffnung der Strahlkammer 12 verhindern. Das Scharnierprofil 58 der Schutzklappe 60 ist teilweise elastisch ausgebildet. Das Scharnierprofil 58 der Schutzklappe 60 besteht teilweise aus einem Elastomer. Das Scharnierprofil 58 der Schutzklappe 60 ist teilweise als elastische Gummileiste ausgebildet. Das Scharnierprofil 58 erstreckt sich entlang der Haupterstreckungsrichtung 86 des Funktionsprofils 52 über eine gesamte Erstreckung des Funktionsprofils 52. Das Scharnierprofil 58 weist entlang der Haupterstreckungsrichtung 86 einen gleichbleibenden Querschnitt auf. Das Scharnierprofil 58 weist an einer Seite eine Wulst 100 auf, welche in der Scharniernut 56 des Funktionsprofils 52 geführt ist. Die Wulst 100 erstreckt sich über eine gesamte Haupterstreckung des Scharnierprofils 58. Zu einer Einführung des Scharnierprofils 58 in die Scharniernut 56 muss eine der Abdeckungen 88, 90 entfernt werden. Ferner weist die Schutzklappe 60 eine Scheibe 61 auf. Das Scharnierprofil 58 weist einen Aufnahmebereich 62 auf, in welchem die Scheibe 61 klemmend aufgenommen ist. Die Scheibe 61 ist kraftschlüssig in dem Aufnahmebereich 62 gehalten. Der Aufnahmebereich 62 ist als Kantenschutzprofil ausgebildet. Der Aufnahmebereich 62 besteht aus einem U-förmigen Gerüstband mit einer das Gerüstband umgebenden Ummantelung aus einem Elastomer. Der Aufnahmebereich 62 erstreckt sich über eine gesamte Haupterstreckung des Scharnierprofils 58. Der Aufnahmebereich 62 ist, in einem Querschnitt des Scharnierprofils 58 betrachtet, auf einer der Wulst 100 gegenüberliegenden Seite des Scharnierprofils 58 angeordnet. Zwischen dem Aufnahmebereich 62 und der Wulst 100 ist ein elastischer Steg 102 angeordnet. Das Scharnierprofil 58 ist im Wesentlichen einstückig ausgebildet. Die Scheibe 61 dient zu einer Abdeckung des Öffnungsbereichs 44 der Strahlkammer 12. Die Scheibe 61 weist eine Größe auf, die annähernd einer Größe des Öffnungsbereichs 44 entspricht. Die Scheibe 61 ist transparent ausgebildet. In der Figur 1 ist zu einer Andeutung der Transparenz der Scheibe 61, die Scheibe 61 in einem Teilbereich ausgeschnitten. Durch die Scheibe 61 kann in einem geschlossen Zustand der Schutzklappe 60 in die Strahlkammer 12 geschaut werden. Durch eine Elastizität des Scharnierprofils 58 kann die Schutzklappe 60 geöffnet und geschlossen werden (Figur 1, 3, 5).

In dem Versteifungskragen 46 ist eine Aufnahmenut 48 zur Aufnahme einer Dichtung 50 integriert. Die Aufnahmenut 48 ist zu einer formschlüssigen Aufnahme der Dichtung 50 vorgesehen. Die Dichtung 50 ist in die Aufnahmenut 48 eingesteckt. Die Dichtung 50 erstreckt sich entlang eines vorderen Bereichs des Versteifungskragens 46, von einem Ende des Funktionsprofils 52 zu einem anderen. Die Dichtung 50 ist dazu vorgesehen, in einem geschlossenen Zustand der Schutzklappe 60 an der Scheibe 61 anzuliegen (Figur 3,5).

Ferner weist das Strahlgerät 10 eine Beleuchtungseinheit 63 auf. Die Beleuchtungseinheit 63 ist zu einer Ausleuchtung der Strahlkammer 12 vorgesehen. Die Beleuchtungseinheit 63 ist teilweise in das Funktionsprofil 52 integriert. Die Beleuchtungseinheit 63 weist ein LED-Modul 104 auf. Das LED-Modul 104 ist auf einer der Strahlkammer 12 zugewandten Innenfläche 106 des Funktionsprofils 52 angeordnet. Das LED-Modul 104 ist fest mit dem Funktionsprofil 52 verbunden. Das Funktionsprofil 52 dient hier zudem als Kühlkörper. Ferner weist die Beleuchtungseinheit 63 eine erste transparente Abdeckung 108 auf, welche das LED-Modul 104 abdeckt. Die erste transparente Abdeckung 108 übergreift das LED-Modul 104 und ist an der Innenfläche 106 mit dem Funktionsprofil 52 verschraubt. Ferner weist die erste transparente Abdeckung 108 einen nicht weiter sichtbaren O-Ring auf, welcher an der Innenfläche 106 des Funktionsprofils 52 anliegt. Über den O-Ring ist das LED-Modul 104 an dem Funktionsprofil 52 gegenüber der Strahlkammer 12 abgedichtet. Dadurch kann ein Eindringen von Strahlgut verhindert werden. Des Weiteren weist die Beleuchtungseinheit 63 eine zweite transparente Abdeckung 110 auf. Die zweite transparente Abdeckung 110 ist von einer kaskadierten Abdeckung gebildet. Die zweite transparente Abdeckung 110 ist über der ersten Abdeckung 108 angeordnet. Ferner ist die zweite transparente Abdeckung 110 an dem Funktionsprofil 52 verrastet. Die zweite Abdeckung 110 ist als wechselbare Abdeckung ausgebildet. Dadurch kann die zweite transparente Abdeckung 110 bei einer Erblindung einfach ausgetauscht werden. Ferner kann dadurch eine Erblindung der ersten transparenten Abdeckung 108 verhindert werden. Ferner weist die Beleuchtungseinheit 63 eine Elektrik auf, welche in dem Funktionsprofil 52 integriert ist. Die Beleuchtungseinheit 63 weist einen Betriebsschalter 112 auf. Der Betriebsschalter 112 ist in einer ersten Abdeckung 88 des Funktionsprofils 52 integriert. Ferner weist die Beleuchtungseinheit 63 ein Zugentlastungselement 114 auf. Das Zugentlastungselement 114 ist dazu vorgesehen, eine mögliche auf ein Netzkabel einwirkende Kraft auf das Gehäuse 14 bzw. das Funktionsprofil 52 abzuleiten. Das Zugentlastungselement 114 ist auf einer Innenseite einer zweiten Abdeckung 90 des Funktionsprofils 52 angeordnet (Figur 5).

Des Weiteren weist das Gehäuse 14 vier Füße 92, 92', 94, 94' auf. Zwei der Füße 92, 92' sind einstückig mit dem Grundkörper 16 ausgebildet. Die zwei Füße 92, 92' sind an einer Unterseite des Grundkörpers 16 angespritzt. Die zwei weiteren Füße 94, 94' sind einstückig mit jeweils einem der Auslegereinheiten 28, 28' ausgebildet. Die zwei weiteren Füße 94, 94' sind an einer Unterseite der Auslegereinheiten 28, 28' angespritzt. Ferner ist auf die Füße 94, 94' jeweils eine Anti-Rusch-Schicht aufgeklebt. Auf die Füße 94, 94' ist jeweils ein Schaumstoff aufgeklebt (Figur 4).

## Patentansprüche

1. Strahlgerät, insbesondere Dentalstrahlgerät, mit zumindest einer Strahlkammer (12) und mit zumindest einem Gehäuse (14), welches zumindest teilweise aus Kunststoff besteht und zumindest einen Grundkörper (16) aufweist, der die Strahlkammer (12) zumindest teilweise umgibt,
**dadurch gekennzeichnet, dass**
das Gehäuse (14) zumindest teilweise in einem Spritzgussverfahren hergestellt ist.

2. Strahlgerät nach Anspruch 1,
**gekennzeichnet durch**
zumindest eine Frontschürze (18), welche fest mit dem Gehäuse (14) verbunden ist und dazu vorgesehen ist, zumindest einen Teilbereich des Gehäuses (14) abzudecken.

3. Strahlgerät nach Anspruch 2,
**dadurch gekennzeichnet, dass**
die zumindest eine Frontschürze (18) zumindest ein Rastelement (20, 20', 20") aufweist, welches mit zumindest einem korrespondierenden Rastelement (22, 22', 22") des Gehäuses (14) verrastet.

4. Strahlgerät nach Anspruch 2 oder 3,
**dadurch gekennzeichnet, dass**
das zumindest eine Gehäuse (14) zumindest eine von einer Handöffnung (24, 24') differierende Lüftungsöffnung (26) aufweist, die in einem montierten Zustand der Frontschürze (18) zumindest im Wesentlichen von der Frontschürze (18) verdeckt wird.

5. Strahlgerät nach einem der vorhergehenden Ansprüche,
**dadurch gekennzeichnet, dass**
das zumindest eine Gehäuse (14) zumindest eine mit dem Grundkörper (16) des Gehäuses (14) einstückig ausgebildete Auslegereinheit (28, 28') aufweist, welche zu einer unteren Aufnahme zumindest einer Strahlguttankeinheit (30, 30') vorgesehen ist.

6. Strahlgerät nach einem der vorhergehenden Ansprüche,
**dadurch gekennzeichnet, dass**
das zumindest eine Gehäuse (14) zumindest eine mit dem Grundkörper (16) des Gehäuses (14) einstückig ausgebildete Schlauchhalterung (32, 32') aufweist, die dazu vorgesehen ist, einen Schlauch (34, 34') eines Handstücks (36, 36') an einer Unterseite des Gehäuses (14) zu führen.

7. Strahlgerät nach einem der vorhergehenden Ansprüche,
**gekennzeichnet durch**
zumindest eine Handstulpeneinheit (38, 38') mit zumindest einer Stulpe (40, 40') und mit zumindest einem Befestigungsring (42, 42'), über welchen die Handstulpeneinheit (38, 38') bajonettverschlussartig mit dem zumindest einen Gehäuse (14) lösbar verbunden ist.

8. Strahlgerät nach einem der vorhergehenden Ansprüche,
**dadurch gekennzeichnet, dass**
das zumindest eine Gehäuse (14) an einem Öffnungsbereich (44) der zumindest einen Strahlkammer (12) an einer Oberkante des Grundkörpers (16) einen Versteifungskragen (46) aufweist, in welche eine Aufnahmenut (48) zur Aufnahme einer Dichtung (50) integriert ist.

9. Strahlgerät nach einem der vorhergehenden Ansprüche,
**gekennzeichnet durch**
ein Funktionsprofil (52), welches zu einer Stabilisierung des Gehäuses (14) fest mit dem zumindest einen Gehäuse (14) verbunden ist.

10. Strahlgerät nach Anspruch 9,
**dadurch gekennzeichnet, dass**
das Funktionsprofil (52) zumindest eine Befestigungsnut (54) zu einer Befestigung zumindest einer Strahlguttankeinheit (30, 30') aufweist.

11. Strahlgerät zumindest nach Anspruch 9,
**dadurch gekennzeichnet, dass**
das Funktionsprofil (52) als Strangpressprofil ausgebildet ist.

12. Strahlgerät zumindest nach Anspruch 9,
**dadurch gekennzeichnet, dass**
das Funktionsprofil (52) zumindest teilweise aus einem elektrisch leitfähigen Material besteht.

13. Strahlgerät zumindest nach Anspruch 9,
**dadurch gekennzeichnet, dass**
das Funktionsprofil (52) zumindest eine Scharniernut (56) zu einer Aufnahme eines Scharnierprofils (58) einer Schutzklappe (60), die in zumindest einem Betriebszustand zu einem Abdecken eines Öffnungsbereichs (44) der zumindest einen Strahlkammer (12) vorgesehen ist, aufweist.

14. Strahlgerät nach Anspruch 13,
**dadurch gekennzeichnet, dass**
das Scharnierprofil (58) der Schutzklappe (60) zumindest teilweise elastisch ausgebildet ist.

15. Strahlgerät zumindest nach Anspruch 13,
**dadurch gekennzeichnet, dass**
die Schutzklappe (60) zumindest eine Scheibe (61) aufweist und das Scharnierprofil (58) der Schutzklappe (60) zumindest einen Aufnahmebereich (62) aufweist, in welchem die Scheibe (61) klemmend aufgenommen ist.

16. Strahlgerät zumindest nach Anspruch 9,
**gekennzeichnet durch**
zumindest eine Beleuchtungseinheit (63), die zumindest teilweise in das Funktionsprofil (52) integriert ist.

17. Strahlgerät zumindest nach einem der vorhergehenden Ansprüche,
**gekennzeichnet durch**
zumindest ein in der zumindest einen Strahlkammer (12) angeordnetes Bodengitter (64), welches zumindest einen integrierten Aufnahmeköcher (66, 66') aufweist, der dazu vorgesehen ist, ein Handstück (36, 36') in einer Parkposition zu halten.
